(19) Europäisches Patentamt

European Patent Office

Office européen des brevets

(11) Veröffentlichungsnummer: **0 405 263 A1**

(12) **EUROPÄISCHE PATENTANMELDUNG**

(21) Anmeldenummer: **90111386.0**

(22) Anmeldetag: **16.06.90**

(51) Int. Cl.⁵: **C08L 81/02**

(30) Priorität: **30.06.89 DE 3921499**

(43) Veröffentlichungstag der Anmeldung:
**02.01.91 Patentblatt 91/01**

(84) Benannte Vertragsstaaten:
**BE DE FR GB IT**

(71) Anmelder: **BAYER AG**

**D-5090 Leverkusen 1 Bayerwerk(DE)**

(72) Erfinder: **Dorf, Ernst-Ulrich, Dr.**
**Bodelschwinghstrasse 16**
**D-4150 Krefeld(DE)**
Erfinder: **Rempel, Dieter, Dr.**
**Max-Beckmann-Strasse 35**
**D-5090 Leverkusen(DE)**
Erfinder: **Wehnert, Wolfgang, Dr.**
**Bodelschwinghstrasse 14**
**D-4150 Krefeld(DE)**
Erfinder: **Rüsseler, Wolfgang, Dr.**
**Waldhofstrasse 121**
**D-4150 Krefeld(DE)**
Erfinder: **Ebert, Wolfgang, Dr.**
**Doerperhofstrasse 31**
**D-4150 Krefeld(DE)**

(54) **Polyarylensulfidformmassen mit verbesserten mechanischen Eigenschaften.**

㊸ Die Erfindung betrifft thermoplastische Formmassen mit verbesserten mechanischen Eigenschaften, aus unverzweigten Polyarylensulfiden (PAS), speziell verzweigten Polyarylensulfiden und gegebenenfalls üblichen Füll-, Verstärkungs- und Hilfsstoffen.

# POLYARYLENSULFIDFORMMASSEN MIT VERBESSERTEN MECHANISCHEN EIGENSCHAFTEN

Die Erfindung betrifft thermoplastische Formmassen mit verbesserten mechanischen Eigenschaften, bestehend aus unverzweigten Polyarylensulfiden (PAS), vorzugsweise Polyphenylensulfiden (PPS), speziell verzweigten Polyarylensulfiden und gegebenenfalls üblichen Füll-, Verstärkungs- und Hilfsstoffen.

Die Herstellung und Verwendung von gegebenenfalls verzweigten Polyarylensulfiden, vorzugsweise Polyphenylensulfiden aus Dihalogenaromaten und Schwefelquellen ist bekannt (z.B. US-A 33 54 129, EP-A 171 021). Weiterhin sind Mischungen von linearen und gelierten Polyarylensulfiden bekannt (EP-A 286 298), die ein verbessertes Verarbeitungsverhalten (geringere Flash-Bildung) aufweisen.

Es wurde gefunden, daß thermoplastische Massen aus unverzweigten Polyarylensulfiden, speziell verzweigten Polyarylensulfiden und gegebenenfalls üblichen Füll-, Verstärkungs- und/oder Hilfsstoffen bei unveränderter Temperaturbeständigkeit bessere mechanische Eigenschaften haben als entsprechende Massen aus unverzweigten oder verzweigten Polyarylensulfiden alleine oder unverzweigten Polyarylensulfiden und verzweigten Polyarylensulfiden anderer Charakteristik (z.B. entsprechend EP-A 286 298).

Gegenstand der Erfindung sind thermoplastische Formmassen aus

a) 100 Teilen Polyarylensulfidharzen, vorzugsweise Polyphenylensulfidharzen, bestehend aus

1) 5-95 Gew.-%, bevorzugt 50-95 Gew-.%, Polyarylensulfiden, vorzugsweies Polyphenylensulfiden, die nach bekannten Verfahren ohne Zusatz von Verzweigern hergestellt wurden, und

2) 5-95 Gew.-%, bevorzugt 5-50 Gew.-%, Polyarylensulfiden, vorzugsweise Polyphenylensulfiden, die nach bekannten Verfahren mit Zusatz von rotationssymmetrischen Verzweigern hergestellt wurden, und

b) 0 bis 200 Teilen üblichen Füll- und/oder Verstärkungsstoffe und

c) 0 bis 20 Teilen üblichen Hilfsstoffen.

Die Verzweiger haben Verknüpfungspunkte, die eine rotationssymmetrische, bevorzugt trigonal rotationssymmetrische, Anordnung aufweisen.

Ein weiterer Gegenstand der Erfindung ist die Verwendung der erfindungsgemäßen thermoplastischen Massen zur Herstellung geformter Körper.

Polyarylensulfide im Sinne der Erfindung sind bekannt (z.B. US-A 33 54 129, EP-A 171 021) und handelsüblich (Ryton®, TEDUR®).

Füll- und Verstärkungsstoffe im Sinne der Erfindung sind beispielsweise solche, wie sie in Modern Plastics Encyclopedia 1988, Vol 64, No. 10 A, S. 183-194 beschrieben sind, z.B. Glasfasern, Kevlarfasern, Glimmer, Quarz, Glaskugeln, Metallplättchen, Talkum, Magnesiumcarbonat, Pigmente u.s.w.

Hilfsstoffe im Sinne der Erfindung sind beispielsweise solche, wie sie in ibid., S. 127-178 beschrieben sind.

Erfindungsgemäß werden als Verzweiger tri- oder höherfunktionelle Bausteine mit rotationssymmetrischer Anordnung der Verknüpfungspunkte eingesetzt, beispielsweise 1,3,5-Trichlorbenzol, 1,3,5-Tribrombenzol, 1,3,5Trimercaptobenzol, 3,5-Dichlorthiophenol, 2,4,6-Tri-chlortriazin, 2,4,6-Trimercaptotriazin, 1,3,5-Tris(4-chlorphenyl)benzol, 2,4,6-Tris(4-chlorphenyl)triazin, 2,4,6-tris(4-chlorphenoxy)-triazin, Hexachlorbenzol, 1,3,5-Tris(4-chlorphenyl)benzol, u.s.w.

Bevorzugt werden 1,3,5-Trichlorbenzol und 1,3,5-Tris(4-chlorphenyl)benzol.

Die Herstellung der erfindungsgemäßen thermoplastischen Massen kann auf handelsüblichen Mischgeräten bei erhöhten Temperaturen von 180 bis 350°C durchgeführt werden. Als Mischgeräte eignen sich beispielsweise Kneter, Einwellen- und Zweiwellenextruder. Die Dosierung der Komponenten kann zusammen oder in beliebiger Reihenfolge erfolgen, gegebenenfalls unter Inertgas (z.B. $N_2$). Auch die Verwendung sogenannter "master batches", d.h. von konzentrierten, vorher hergestellten Mischungen einzelner Substanzen, ist möglich. Für die weitere Verarbeitung kann die erhaltene Mischung nach dem Erstarren der Schmelze kontinuierich oder in einem Extraschritt granuliert werden.

Gegebenenfalls können in weiteren Arbeitsgängen oder direkt im oben beschriebenen Verfahren weitere Polymere wie Polyether, Polyester, Polycarbonate, Polyamide, Polyimide, Polysulfide, Polysulfone, Polyurethane, deren Mischungen und/oder Copolymere zugemischt werden.

Die erfindungsgemäßen Massen eignen sich ausgezeichnet für die Herstellung geformter Körper nach üblichen Standardverfahren wie Extrusion, Spritzguß oder Laminierung.

Geformte Körper im Sinne der Erfindung sind beispielsweise Extrudate (z.B. Fasern, Folien, Profile, Rohre etc.), Spritzgußteile (z.B. Formteile aus dem Elektro/Elektroniksektor, dem Apparatebau, dem Haushaltsbereich, dem Kfz-Bereich etc.) und Laminate (z.B. Beschichtungen, Halbzeug, Fertigteile, Verbundwerkstoffe etc.).

Beispiele

Verwendete Materialien

PAS 1... Polyarylensulfid aus 1,4-Dichlorbenzol und Natriumsulfid ohne tri- oder höherfunktionellem Baustein (beispielsweise nach EP-A 171 021)

PAS 2... Polyarylensulfid aus 1,4-Dichlorbenzol und Natriumsulfid mit 1,2,4-Trichlorbenzol als trifunktionellem Baustein (0,3 Mol-% bezogen auf 1,4-Dichlorbenzol) (beispielsweise nach US-A 33 54 129)

PAS 3... Polyarylensulfid aus 1,4-Dichlorbenzol und Natriumsulfid mit 1,2,4,5-Tetrachlorbenzol als höherfunktionellem Baustein (1 Mol-% bezogen auf 1,4-Dichlorbenzol) (entsprechend EP-A 286 298, Polymer B2)

PAS 4... Polyarylensulfid aus 1,4-Dichlorbenzol und Natriumsulfid mit 1,3,5-Trichlorbenzol als trifunktionellem Baustein (0,3 Mol-% bezogen auf 1,4-Dichlorbenzol)

PAS 5... Polyarylensulfid aus 1,4-Dichlorbenzol und Natriumsulfid mit 1,3,5-Tris(4-chlorphenyl)benzol als trifunktionellem Baustein (0,3 Mol-% bezogen auf 1,4-Dichlorbenzol)

GF... geschlichtete 6 mm-Glasfaser mit einem Faserdurchmesser von ca. 10 $\mu$m

PC... handelsübliches Polycarbonat (z.B. ®Makrolon 2808, Bayer AG)

Herstellung der Formmassen

Die Formmassen wurden durch Mischen und Homogenisieren der Komponenten in der Schmelze bei ca. 300 bis 320°C Massetemperatur auf einer Zweiwellenschnecke (ZSK 32, Werner & Pfleiderer) hergestellt und anschließend nach Standardmethoden zu Prüfstäben verspritzt. Die Prüfstäbe wurden nach DIN bzw. ASTM auf ihr Mechanikniveau untersucht (s. Tabelle).

Tabelle :

| Versuch | Rezeptur in Gew.-% | | | | | | | Prüfprogramm | | | | Kommentar |
|---|---|---|---|---|---|---|---|---|---|---|---|---|
| | PAS 1 | PAS 2 | PAS 3 | PAS 4 | PAS 5 | GF | PC | SbR[1] $(N/mm^2)$ | DbR[2] (%) | E-Modul[3] $(N/mm^2)$ | $a_n$[4] $kJ/m^2$ | |
| 1 | 60 | - | - | - | - | 40 | - | 242 | 1,81 | 12 700 | 29,2 | Vergleich unverzweigt |
| 2 | 30 | 30 | - | - | - | 40 | - | 248 | 1,85 | 12 600 | 29,9 | Vergleich unsym. Verzweiger |
| 3 | 45 | - | 15 | - | - | 40 | - | 242 | 1,68 | 13 600 | 25,9 | Vergleich unsym. Verzweiger |
| 4 | - | - | - | - | 60 | 40 | - | konnte nicht verarbeitet werden (Viskosität zu hoch) | | | | Vergleich nur verzweigt |
| 5 | 45 | - | - | 15 | - | 40 | - | 279 | 1,98 | 14 100 | 32,0 | Erf. |
| 6 | 45 | - | - | - | 15 | 40 | - | 281 | 1,99 | 13 800 | 31,5 | Erf. |
| 7 | 30 | - | - | 30 | - | 40 | - | 276 | 1,97 | 14 000 | 31,0 | Erf. |
| 8 | 30 | - | - | - | 30 | 40 | - | 274 | 1,97 | 13 800 | 33,5 | Erf. |
| 9 | 42 | - | - | - | 15 | 40 | 3 | 285 | 2,08 | 13 700 | 33,0 | Erf. |

[1] Biegefestigkeit (DIN 53 452)

[2] Randfserdehnung bei Bruch (DIN 53 452)

[3] E-Modul (DIN 53 457)

[4] Izod-Schlagzähigkeit (ISO 180-1C)

EP 0 405 263 A1

**Ansprüche**

1. Thermoplastische Massen aus
   a) 100 Teilen Polyarylensulfidharzen, vorzugsweise Polyphenylensulfidharzen, bestehend aus
      1) 5-95 Gew.-%, bevorzugt 50-95 Gew.-%, Polyarylensulfiden, vorzugsweies Polyphenylensulfiden, die nach bekannten Verfahren ohne Zusatz von rotationssymmetrischen Verzweigern hergestellt wurden,
      und
      2) 5-95 Gew.-%, bevorzugt 5-50 Gew.-%, Polyarylensulfiden, vorzugsweise Polyphenylensulfiden die nach bekannten Verfahren mit Zusatz von rotationssymmetrischen Verzweigern hergestellt wurden,
      und
   b) 0 bis 200 Teilen üblicher Füll- und/oder Verstärkungsstoffe
   und
   c) 0 bis 20 Teilen üblichen Hilfsstoffe.
2. Thermoplastische Massen nach Anspruch 1, dadurch gekennzeichnet, daß als Verzeiger tri- und/oder höherfunktionelle Bausteine eingesetzt werden und die Verknüpfungspunkte eine rotationssymmetrische, bevorzugt trigonal rotationssymmetrische, Anordnung aufweisen.
3. Verwendung der Massen nach Anspruch 1 zur Herstellung geformter Körper.

5

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | DE - A1 - 2 537 166 (PHILLIPS PETROLEUM CO.) * Ansprüche; Seite 6, Zeile 18 - Seite 7, Zeile 3 * -- | 1-3 | C 08 L 81/02 |
| X | EP - A2 - 0 260 871 (KUREHA KAGAKU KOGYO KABUSHIKI KAISHA) * Ansprüche; Seite 5, Zeilen 20-23 * -- | 1-3 | |
| X | EP - A1 - 0 257 228 (TOHPREN CO., LTD.) * Ansprüche; Seite 5, Zeilen 18-33; Seite 7, Zeile 16 * ---- | 1-3 | |

| | | | RECHERCHIERTE SACHGEBIETE (Int Cl⁵) |
|---|---|---|---|
| | | | C 08 L 81/00 |

Der vorliegende Recherchenbericht wurde für alle Patentansprüche erstellt

| Recherchenort | Abschlußdatum der Recherche | Prüfer |
|---|---|---|
| WIEN | 01-10-1990 | WEIGERSTORFER |

KATEGORIE DER GENANNTEN DOKUMENTEN

X von besonderer Bedeutung allein betrachtet
Y von besonderer Bedeutung in Verbindung mit einer anderen Veröffentlichung derselben Kategorie
A technologischer Hintergrund
O nichtschriftliche Offenbarung
P Zwischenliteratur
T der Erfindung zugrunde liegende Theorien oder Grundsätze

E älteres Patentdokument, das jedoch erst am oder nach dem Anmeldedatum veröffentlicht worden ist
D in der Anmeldung angeführtes Dokument
L aus andern Gründen angeführtes Dokument

& Mitglied der gleichen Patentfamilie, übereinstimmendes Dokument